(19)

Europäisches Patentamt
European Patent Office
Office européen des brevets

(11)  **EP 2 512 006 B1**

(12)  **EUROPEAN PATENT SPECIFICATION**

(45) Date of publication and mention
of the grant of the patent:
**01.02.2017  Bulletin 2017/05**

(21) Application number: **09852034.9**

(22) Date of filing: **07.12.2009**

(51) Int Cl.:
***H02J 50/20*** *(2016.01)*

(86) International application number:
**PCT/JP2009/070467**

(87) International publication number:
**WO 2011/070637 (16.06.2011 Gazette 2011/24)**

(54) **MAGNETIC-FIELD RESONANCE POWER TRANSMISSION DEVICE AND MAGNETIC-FIELD RESONANCE POWER RECEIVING DEVICE**

MAGNETFELDRESONANZLEISTUNGSÜBERTRAGUNGSVORRICHTUNG UND MAGNETFELDRESONANZLEISTUNGSEMPFANGSVORRICHTUNG

DISPOSITIF DE TRANSMISSION D'ÉNERGIE PAR RÉSONANCE DE CHAMP MAGNÉTIQUE ET DISPOSITIF DE RÉCEPTION D'ÉNERGIE PAR RÉSONANCE DE CHAMP MAGNÉTIQUE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**17.10.2012  Bulletin 2012/42**

(73) Proprietor: **Fujitsu Limited**
**Kawasaki-shi, Kanagawa 211-8588 (JP)**

(72) Inventor: **SHIMOKAWA, Satoshi**
**Kawasaki-shi**
**Kanagawa 211-8588 (JP)**

(74) Representative: **Wilding, Frances Ward et al**
**Haseltine Lake LLP**
**Lincoln House, 5th Floor**
**300 High Holborn**
**London WC1V 7JH (GB)**

(56) References cited:
**JP-A- 2007 125 926     JP-A- 2009 081 945**
**JP-A- 2009 106 136     US-A1- 2009 224 608**

**Description**

Technical Field

The embodiments discussed herein are related to a magnetic resonance electric power-transmitting apparatus used for wireless electric power transmission by magnetic resonance and a magnetic resonance electric power-receiving apparatus.

Background Art

There is a magnetic resonance wireless electric power transmission system that performs wireless electric power transmission by magnetic resonance. The magnetic resonance wireless electric power transmission system includes an electric power-transmitting apparatus provided with a resonance coil and an electric power-receiving apparatus provided with a resonance coil. The resonance coil provided in the electric power-transmitting apparatus and the resonance coil provided in the electric power-receiving apparatus have the same resonance frequency.

When electric power is supplied to the resonance coil of the electric power-transmitting apparatus to cause an alternating current to flow therethrough which has the same frequency as the resonance frequency of the resonance coil, electric power transmission by magnetic resonance is performed between the resonance coil of the electric power-transmitting apparatus and the resonance coil of the electric power-receiving apparatus, whereby an alternating current flows through the resonance coil of the electric power-receiving apparatus. Thus, electric power is wirelessly transmitted from the electric power-transmitting apparatus to the electric power-receiving apparatus.

For example, the wireless electric power transmission systems includes not only the magnetic resonance wireless electric power transmission system but also a wireless electric power transmission system using radio waves and a wireless electric power transmission system using electromagnetic induction. Compared with these other electric power transmission systems, the magnetic resonance wireless electric power transmission system has the following merits: The magnetic resonance wireless electric power transmission system is capable of transmitting a larger amount of electric power than that transmitted by the wireless electric power transmission system using radio waves. Further, the magnetic resonance wireless electric power transmission system makes it possible to increase a distance of electric power transmission, compared with the wireless electric power transmission system using electromagnetic induction, and further makes it possible to reduce the resonance coils of the electric power-transmitting apparatus and the electric power-receiving apparatus in size.

Citation List

PTL 1: Japanese Laid-Open Patent Publication No. 2009-152862
PTL 2: Japanese Laid-Open Patent Publication No. 2007-142088
PTL 3: Japanese Laid-Open Patent Publication No. 62-126607

US2009224608 A1 refers to ferrite antennas for wireless power transfer. A portable device is disclosed which comprises a housing; a ferrite antenna, inside said housing, and having a first coil part thereon in parallel with a capacitor forming an LC value, a second coil part thereon, and where said first and second coil parts are electrically unconnected with one another; a circuit, that receives power from said second coil part, and transfers said power to a powered device within said housing to power said device, wherein said ferrite antenna operates to reduce an amount of magnetic flux within the housing.

Summary of Invention

Technical Problem

However, in the magnetic resonance wireless electric power transmission system, the resonance frequency of the resonance coil of the electric power-transmitting apparatus or the resonance frequency of the resonance coil of the electric power-receiving apparatus may deviate from a target frequency due to unevenness of manufacturing, changes in environmental conditions of use, such as temperature and humidity, the adverse influence of external magnetic materials, and so forth. This may cause reduction of the efficiency of electric power transmission (energy transfer efficiency).

The present invention has been made in view of this, and the object thereof is to provide a magnetic resonance electric power-transmitting apparatus and a magnetic resonance electric power-receiving apparatus which are improved in the efficiency of electric power transmission.

Solution to Problem

To solve the above-described problem, there is provided a magnetic resonance electric power-transmitting apparatus according to independent claim 1 and a magnetic resonance electric power-receiving apparatus according to independent claim 6.

Advantageous Effects of Invention

According to the disclosed magnetic resonance electric power-transmitting apparatus and the magnetic resonance electric power-receiving apparatus, it is possible to improve the efficiency of electric power transmission.

The above and other objects, features, and advantages of the invention will become more apparent from the following detailed description taken in conjunction with the following drawings illustrating preferred embodiments of the present invention by way of example.

Brief Description of Drawings

[FIG. 1] FIG. 1 illustrates an example of a magnetic resonance wireless electric power transmission system according to a first embodiment.
[FIG. 2] FIG. 2 is an equivalent circuit diagram illustrating an example of a resonance coil according to the first embodiment.
[FIG. 3] FIG. 3 is a graph illustrating an example of a state of electric power transmission in the magnetic resonance wireless electric power transmission system according to the first embodiment.
[FIG.4] FIGS. 4(A) and 4(B) are model diagrams useful in explaining characteristics of a magnetic material.
[FIG. 5] FIG. 5 is a model diagram useful in explaining characteristics of the magnetic material.
[FIG.6] FIG. 6 is a side view of an example of a magnetic resonance electric power-transmitting apparatus according to a second embodiment.
[FIG. 7] FIG. 7 is a perspective view corresponding to FIG. 6.
[FIG. 8] FIG. 8 illustrates an example of a method of setting a magnetic field shield according to a third embodiment.
[FIG. 9] FIG. 9 illustrates another example of the method of setting the magnetic field shield according to the third embodiment.
[FIG. 10] FIG. 10 is a side view of an example of a magnetic resonance electric power-transmitting apparatus according to a fourth embodiment.
[FIG. 11] FIG. 11 is a flowchart of an example of a procedure of adjustment of the magnetic resonance electric power-transmitting apparatus according to the fourth embodiment.
[FIG. 12] FIG. 12 is a side view of an example of a magnetic resonance electric power-receiving apparatus according to a fifth embodiment.
[FIG. 13] FIG. 13 is a perspective view corresponding to FIG. 12.
[FIG. 14] FIG. 14 is a flowchart of an example of a procedure of adjustment of the magnetic resonance electric power-receiving apparatus according to the fifth embodiment.
[FIG. 15] FIG. 15 is a sequence diagram of an example of a procedure of adjustment of a magnetic resonance wireless electric power transmission system according to a sixth embodiment.

Description of Embodiments

Embodiments of the present invention will be explained below with reference to the accompanying drawings.

[First Embodiment]

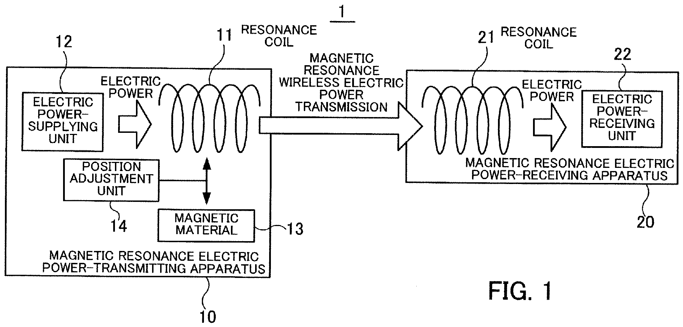

FIG. 1 illustrates an example of a magnetic resonance wireless electric power transmission system according to a first embodiment.
The magnetic resonance wireless electric power transmission system, denoted by reference numeral 1, includes a magnetic resonance electric power-transmitting apparatus 10 that transmits electric power, and a magnetic resonance electric power-receiving apparatus 20 to which electric power transmitted from the magnetic resonance electric power-transmitting apparatus 10 is supplied.
The magnetic resonance electric power-transmitting apparatus 10 includes a resonance coil 11, an electric power-supplying unit 12 which supplies electric power to the resonance coil 11 to cause the resonance coil 11 to generate a magnetic field, a magnetic material 13 which varies the magnetic field generated by the resonance coil 11, and a position adjustment unit 14 which adjusts a positional relationship between the resonance coil 11 and the magnetic material 13.
The resonance coil 11 forms an LC resonance circuit having an inductance and a capacitance, and has the resonance frequency of the same frequency as the transmission frequency. Note that the transmission frequency is a frequency used for transmitting electric power from the magnetic resonance electric power-transmitting apparatus 10 to the magnetic resonance electric power-receiving apparatus 20.
Further, although in the resonance coil 11, the capacitance thereof is obtained from floating capacitance of the resonance coil 11, it may be obtained by providing a capacitor between coil wires of the resonance coil 11. When electric power is supplied from the electric power-supplying unit 12 to the resonance coil 11, and an alternating current flows through the resonance coil 11, the resonance coil 11 generates a magnetic field therearound. The magnetic field generated by the resonance coil 11 oscillates according to the frequency of flowing alternating current.
The electric power-supplying unit 12 supplies electric power to the resonance coil 11 to cause the resonance coil 11 to generate an alternating current having the same frequency as the transmission frequency. The electric power-supplying unit 12 is formed e.g. by an alternating current power supply and a coil connected to the alternating current power supply, and supplies electric power to the resonance coil 11 using electromagnetic induction. The electric power-supplying unit 12 may be formed by an alternating current power supply, and be directly connected to the resonance coil 11 e.g. by wiring to supply electric power.

For example, a plate-shaped or sheet-shaped ferrite is used for the magnetic material 13. The magnetic material 13 varies the magnetic field generated by the resonance coil 11 according to a position thereof relative to the resonance coil 11 and a shape thereof. Further, the magnetic material 13 is capable of functioning as a shielding material for preventing the magnetic field generated by the resonance coil 11 from being affected by external magnetic materials, or preventing the magnetic field generated by the resonance coil 11 from affecting external electronic components.

The position adjustment unit 14, for example, rotates the magnetic material 13, or moves the magnetic material 13 toward or away from the resonance coil 11 to thereby adjust a positional relationship between the resonance coil 11 and the magnetic material 13. Inversely, the position adjustment unit 14 may be configured to adjust the positional relationship between the resonance coil 11 and the magnetic material 13 by rotating the resonance coil 11, or moving the resonance coil 11 toward or away from the magnetic material 13.

Next, the magnetic resonance electric power-receiving apparatus 20 includes a resonance coil 21 to which electric power is transmitted from the resonance coil 11, and an electric power-receiving unit 22 which receives electric power from the resonance coil 21.

The resonance coil 21 forms an LC resonance circuit having an inductance and a capacitance, and has the resonance frequency of the same frequency as the transmission frequency. That is, the resonance frequency of the resonance coil 21 is equal to the resonance frequency of the resonance coil 11. Although the capacitance is obtained from floating capacitance of the resonance coil 21, it may be obtained by providing a capacitor between coil wires of the resonance coil 21. The resonance coil 21 has an alternating current generated therein according to oscillation of the magnetic field generated by the resonance coil 11.

The electric power-receiving unit 22 is formed e.g. by an electric power consumption section or an electric power accumulation section, and a coil connected to one of the electric power consumption section and the electric power accumulation section, and receives electric power from the resonance coil 21 using electromagnetic induction. The electric power-receiving unit 22 may be formed by the electric power consumption section or the electric power accumulation section, and be directly connected to the resonance coil 21 e.g. by wiring to receive electric power.

As described above, in the magnetic resonance wireless electric power transmission system 1, the resonance coil 11 and the resonance coil 21 both have the same resonance frequency as the transmission frequency. Therefore, when electric power is supplied to the resonance coil 11 to cause an alternating current to flow therethrough, electric power transmission by magnetic field resonance is performed between the resonance coil 11 and the resonance coil 21, whereby the alternating current flows through the resonance coil 21.

As a result, electric power transmission from the resonance coil 11 to the resonance coil 21 is wirelessly performed. Note that in the magnetic resonance wireless electric power transmission system 1, the distance between the resonance coil 11 and the resonance coil 21 in electric power transmission is assumed to be e.g. between approximately several tens cm and 2 m.

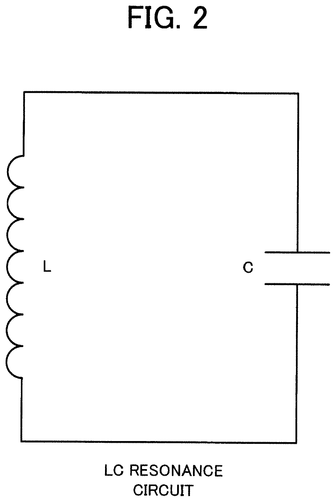

FIG. 2 is an equivalent circuit diagram illustrating an example of the resonance coil according to the first embodiment.

The resonance coils 11 and 21 each form an LC resonance circuit having an inductance L and a capacitance C, as illustrated in FIG. 2. A resonance frequency f of the LC resonance circuit is expressed by the following equation:

$$F = \omega/2\pi = 1/2\pi \, (LC)^{1/2} \quad \dots (1)$$

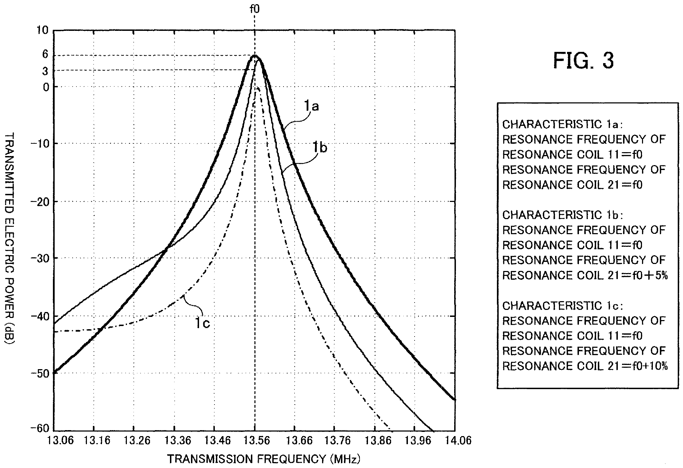

FIG. 3 is a graph illustrating an example of a state of electric power transmission of the magnetic resonance wireless electric power transmission system according to the first embodiment.

The horizontal axis of the graph indicates the transmission frequency (MHz), and the vertical axis indicates the transmitted electric power (dB). The transmitted electric power is electric power transmitted from the resonance coil 11 to the resonance coil 21.

A characteristic 1a indicates the transmitted electric power characteristics exhibited when the resonance frequency of the resonance coil 11 and the resonance coil 21 is equal to a target frequency f0. In the illustrated example, f0 has a value of 13.56 MHz. A characteristic 1b indicates the transmitted electric power characteristics exhibited when the resonance frequency of the resonance coil 11 is equal to f0, and that of the resonance coil 21 deviates by +5% from f0. A characteristic 1c indicates the transmitted electric power characteristics exhibited when the resonance frequency of the resonance coil 11 is equal to f0, and that of the resonance coil 21 deviates by +10% from f0.

As indicated by the characteristic 1a, the transmitted electric power has steep characteristics in which a peak appears when the transmission frequency is equal to f0 which is the same as the resonance frequency of the resonance coil 11 and the resonance coil 21. The transmitted electric power thus indicates steep characteristics, and this makes it possible to increase a Q-value indicative of the efficiency of electric power transmission. In the characteristic 1a, when the transmission frequency is equal to f0, the transmitted electric power becomes approximately 6dB.

On the other hand, since the transmitted electric power has steep characteristics, if the resonance frequency of the resonance coil 11 or the resonance coil 21 deviates from the targeted resonance frequency due to unevenness of manufacturing, changes in environmental conditions of use, such as temperature and humidity, the adverse influence of external magnetic materials, and so forth, causing a shift of the characteristics along the horizontal axis, the transmitted electric power is largely reduced.

That is, as indicated by the characteristic 1b, if the resonance frequency of the resonance coil 21 deviates from f0 by +5%, the transmitted electric power exhibited when the transmission frequency is equal to f0 becomes approximately 3dB, showing a large decrease compared with the case of the characteristic 1a.

Further, as indicated by the characteristic 1c, if the resonance frequency of the resonance coil 21 deviates from f0 by +10%, although a shift amount along the horizontal axis is small, the transmitted electric power exhibited when the transmission frequency is equal to f0 becomes approximately 0dB, showing a large decrease compared with the case of the characteristic 1a.

As described above, in the magnetic resonance wireless electric power transmission system 1, if the resonance frequency of the resonance coil 11 or the resonance coil 21 deviates from the target frequency, the efficiency of electric power transmission may be largely reduced.

Next, a description will be given of characteristics of the magnetic material 13.

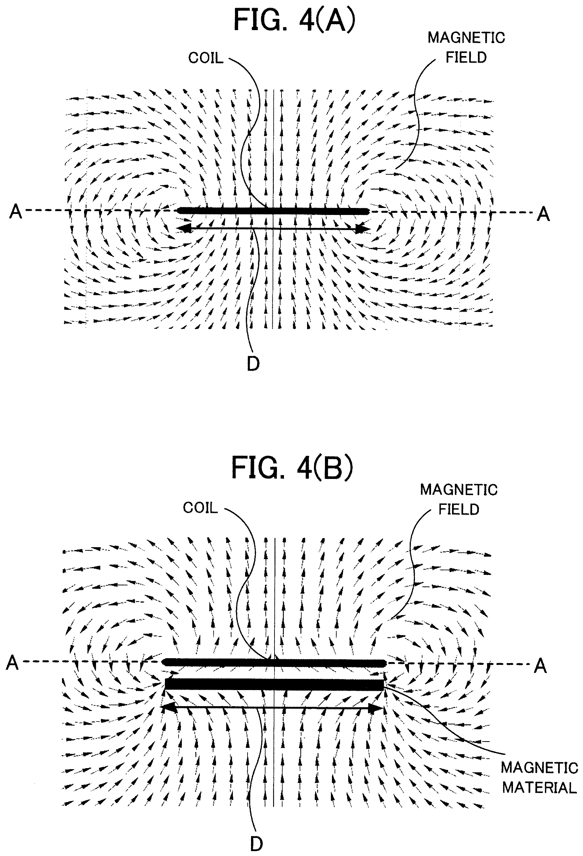

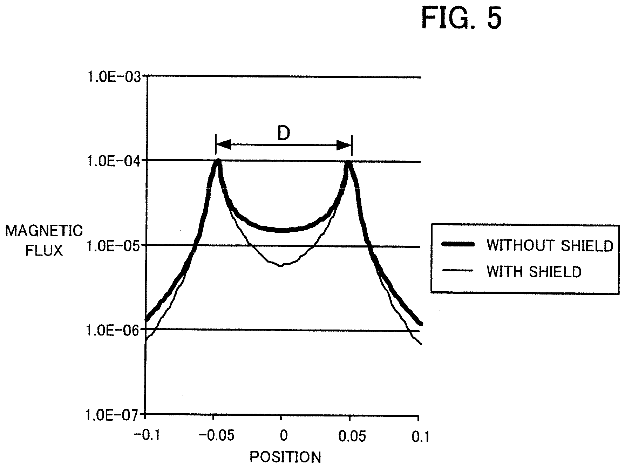

FIGS. 4(A), 4(B) and 5 are model diagrams useful in explaining the characteristics of the magnetic material. FIG. 4(A) illustrates a magnetic field generated by a coil. FIG. 4(B) illustrates a state in which a magnetic material is disposed in the magnetic field illustrated in FIG. 4(A). FIG. 5 illustrates levels of magnetic flux at a location indicated by a dotted line A-A in FIGS. 4(A) and 4(B). Note that a location D in FIG. 5 corresponds to the location D in FIGS. 4(A) and 4(B).

As illustrated in FIGS. 4(A) and 4(B), when the magnetic material is disposed in the magnetic field generated by the coil, flux linkage of the coil changes. When the flux linkage increases, the inductance L of the coil increases, whereas when the flux linkage decreases, the inductance L of the coil decreases. As illustrated in FIG. 5, this example illustrates that the magnetic material causes a decrease in the flux linkage, whereby the inductance L of the coil is lowered.

Further, an amount of the flux linkage changes according to a change in the relative positions of the coil and the magnetic material. That is, when the distance between the coil and the magnetic material is increased or reduced, the flux linkage of the coil increase or decrease, and as a result, the inductance L also changes.

As described above, in the magnetic resonance wireless electric power transmission system 1, the magnetic material 13 changes the inductance L of the resonance coil 11. Further, the inductance L of the resonance coil 11 changes according to a change in the relative positions of the resonance coil 11 and the magnetic material 13.

As described heretofore, in the magnetic resonance wireless electric power transmission system 1, if the resonance frequency of the resonance coil 11 or the resonance coil 21 deviates from the target frequency, the efficiency of electric power transmission may be reduced, as described with reference to FIG. 3.

On the other hand, in the magnetic resonance wireless electric power transmission system 1, the position adjustment unit 14 adjusts the position of the magnetic material 13 to thereby make it possible to change the inductance L of the resonance coil 11, as described with reference to FIGS. 4(A) and 4(B). The resonance frequency of the resonance coil 11 changes according to a change in the inductance L, as expressed by the above equation (1).

Therefore, in the magnetic resonance wireless electric power transmission system 1, by adjusting the position of the magnetic material 13 using the position adjustment unit 14, it is possible to adjust the resonance frequency of the resonance coil 11 such that it becomes equal to the target frequency.

As described above, the magnetic resonance wireless electric power transmission system 1 makes it possible to improve the efficiency of electric power transmission.

Further, in the magnetic resonance wireless electric power transmission system 1, the resonance frequency of the resonance coil 11 is adjusted by adjusting the position of the magnetic material 13 as described above, and hence it is possible to adjust the resonance frequency without executing a complicated process.

That is, as a method of adjusting the resonance frequency of the resonance coil 11, for example, it is possible to envisage a method in which the capacitance C of the resonance coil 11 is changed using a variable capacitor, and a method in which the shape of the resonance coil 11 is changed to change the inductance L. However, these methods are quite complicated in the process for adjustment. The method of adjusting the position of the magnetic material 13 makes it possible to perform the adjustment of the resonance frequency by a quite simple process, compared with these adjustment methods.

Although in the magnetic resonance wireless electric power transmission system 1, the magnetic material 13 and the position adjustment unit 14 are provided only in the magnetic resonance electric power-transmitting apparatus 10, similarly, the magnetic material 13 and the position adjustment unit 14 may be provided in the magnetic resonance electric power-receiving apparatus 20. In this case, it is possible to adjust the resonance frequency of the resonance coil 21 such that it becomes equal to the target frequency.

Next, a description will be given of an embodiment in which the magnetic resonance electric power-transmitting apparatus 10 according to the first embodiment is further embodied, as a second embodiment.

[Second Embodiment]

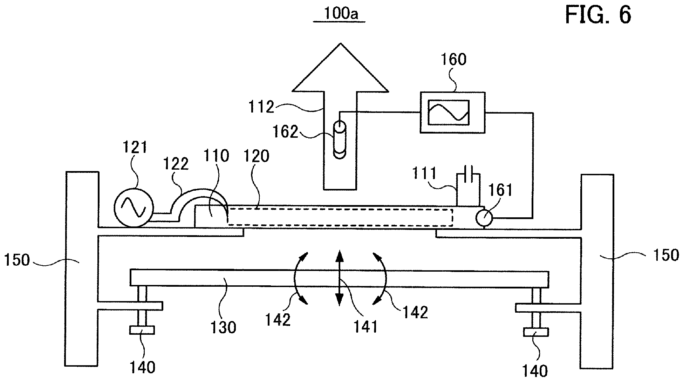

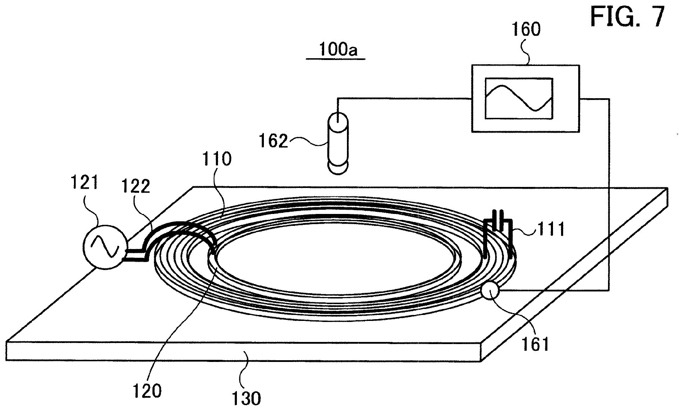

FIG. 6 is a side view of an example of the magnetic resonance electric power-transmitting apparatus according to the second embodiment. FIG. 7 is a perspective view corresponding to FIG. 6. In FIG. 7, illustration of position adjustment screws 140 and a frame 150 is omitted.

The magnetic resonance electric power-transmitting apparatus 100a includes a resonance coil 110, a coil 120 which supplies electric power to the resonance coil 110 by electromagnetic induction, an alternating current power supply 121 which causes the coil 120 to generate an alternating current, and a magnetic field shield 130 which varies a magnetic field generated by the resonance coil 110.

For example, copper (Cu) is used for the material of the resonance coil 110. For example, a spiral coil having a diameter of 30 cm is used for the resonance coil 110. The resonance coil 110 forms an LC resonance circuit having an inductance L and a capacitance C, and has the resonance frequency of the same frequency as the transmission frequency. Although the capacitance C is obtained by providing a capacitor 111 between coil wires of the resonance coil 110, the capacitance C may be obtained by floating capacitance of the resonance coil 110 without using the capacitor 111. Further, the resonance frequency of the resonance coil 110 is e.g. 10 MHz.

Further, when electric power is supplied from the coil 120 to the resonance coil 110 by electromagnetic induction, whereby an alternating current having the same frequency as the resonance frequency flows through the resonance coil 110, the resonance coil 110 performs electric power transmission by magnetic resonance toward the resonance coil (not illustrated) of the magnetic resonance electric power-receiving apparatus. An arrow 112 in FIG. 6 indicates a direction of this electric power transmission.

For the alternating current power supply 121, a Colpits oscillator, for example, is used. The alternating current power supply 121 is connected to the coil 120 via a wire 122, and causes the coil 120 to generate an alternating current having the same frequency as the transmission frequency, e.g. 10 MHz.

For the material of the coil 120, copper (Cu), for example, is used. The coil 120 has a smaller diameter than the resonance coil 110, and is disposed inside the resonance coil 110. By making the diameter of the coil 120 smaller than that of the resonance coil 110, it is possible to reduce a degree of influence of the magnetic field generated by the coil 120 on the electric power transmission by magnetic resonance.

When an alternating current is supplied from the alternating current power supply 121 to the coil 120, the coil 120 supplies electric power to the resonance coil 110 by electromagnetic induction to cause the resonance coil 110 to generate an alternating current. Here, the frequency of the alternating current flowing through the coil 120 is equal to the frequency of the alternating current generated in the resonance coil 110. That is, when an alternating current having the same frequency as the transmission frequency of e.g. 10 MHz is supplied to the coil 120, an alternating current having the same frequency as the transmission frequency of e.g. 10 MHz flows through the resonance coil 110.

As described above, electric power is supplied to the resonance coil 110 not by wiring but by electromagnetic induction. This makes it possible to prevent resistance from being added to the resonance coil 110 due to the alternating current power supply 121 or wiring for electric power supply, and hence it is possible to obtain the resonance coil 110 with a small loss and a high resonance Q-value.

For the magnetic field shield 130, a magnetic material, such as a ferrite, for example, is used. The magnetic field shield 130 is located below the resonance coil 110. That is, the magnetic field shield 130 is disposed at a location opposite from a side of the resonance coil 110 where electric power transmission by magnetic resonance is performed. The magnetic field shield 130 varies the magnetic field generated by the resonance coil 110 according to the relative position to the resonance coil 110 and the shape thereof to thereby vary the resonance frequency of the resonance coil 110.

The magnetic field shield 130 further prevents the magnetic field generated by the resonance coil 110 from being affected by external magnetic materials, and further prevents the magnetic field generated by the resonance coil 110 from affecting external electronic components. The outer periphery of the magnetic field shield 130 is located outside the outer periphery of the resonance coil 110. That is, the magnetic field shield 130 is larger than the resonance coil 110 in area.

Further, the magnetic resonance electric power-transmitting apparatus 100a includes the frame 150 which supports the resonance coil 110, the coil 120, and the magnetic field shield 130, and the position adjustment screws 140 which are provided on the frame 150 and adjusts a positional relationship between the resonance coil 110 and the magnetic field shield 130.

A plurality of the position adjustment screws 140 are provided in association with the periphery of the magnetic field shield 130. The position adjustment screws 140 are rotated to thereby move the magnetic field shield 130 upward or downward to vary the relative positions of the resonance coil 110 and the magnetic field shield 130.

By uniformly rotating all of the plurality of position adjustment screws 140, it is possible to move the magnetic field shield 130 in a translational manner as indicated by an arrow 141. Further, by selectively rotating some of the plurality of positional adjustment screws 140, it is also possible to move the magnetic field shield 130 in a pivotal manner as indicated by arrows 142, to cause the same to be inclined.

The magnetic resonance electric power-transmitting apparatus 100a further includes a current sensor 161 for detecting an electric current flowing through the resonance coil 110, a magnetic field sensor 162 for detecting a magnetic field generated by the resonance coil 110, and a measurement device 160 for measuring an electric current detected by the current sensor 161 and a magnetic field detected by the magnetic field sensor 162.

For example, a hole element is used for the current sensor 161. The current sensor 161 is disposed in a manner clamping the coil wire forming the resonance coil 110. The magnetic field sensor 162 is located above the resonance coil 110, i.e. in a direction of electric power transmission by magnetic resonance indicated by the arrow 112.

Note that the electric current flowing through the resonance coil 110 and the magnetic field generated by the resonance coil 110 become larger as the resonance frequency of the resonance coil 110 becomes closer to the target frequency, and become maximum when the resonance frequency of the resonance coil 110 becomes equal to the target frequency. That is, it is possible to detect a difference between the resonance frequency of the resonance coil 110 and the target frequency based on a result of measurement by the measurement device 160.

Although the magnetic resonance electric power-transmitting apparatus 100a is provided with both of the current sensor 161 and the magnetic field sensor 162, it may be provided with one of them.

Next, a description will be given of a procedure of adjustment of the magnetic resonance electric power-transmitting apparatus 100a.

First, an alternating current having the same frequency as the transmission frequency is generated in the coil 120 by the alternating current power supply 121.

Next, the measurement device 160 measures an electric current flowing through the resonance coil 110 or a magnetic field generated by the resonance coil 110.

Next, if the measurement result obtained by the measurement device 160 does not reach the maximum value, the position adjustment screws 140 are rotated to adjust the position of the magnetic field shield 130 such that the measurement result reaches the maximum value.

With the above-mentioned adjustment, it is possible to adjust the resonance frequency of the resonance coil 110 to the target frequency.

As described above, in the magnetic resonance electric power-transmitting apparatus 100a, the position adjustment screws 140 are rotated to adjust the position of the magnetic field shield 130 according to the measurement result by the measurement device 160, whereby it is possible to adjust the resonance frequency of the resonance coil 110 to the target frequency.

This enables the magnetic resonance electric power-transmitting apparatus 100a to improve the efficiency of electric power transmission.

Further, in the magnetic resonance electric power-transmitting apparatus 100a, the resonance frequency of the resonance coil 110 is adjusted by adjusting the position of the magnetic field shield 130 as mentioned above, and hence it is possible to adjust the resonance frequency without executing a complicated process.

Next, a description will be given of a method of setting the magnetic field shield 130 of the magnetic resonance electric power-transmitting apparatus 100a according to the second embodiment as a third embodiment.

[Third Embodiment]

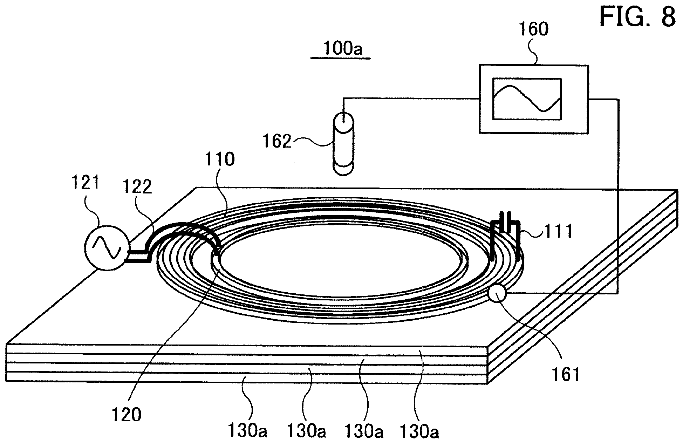

FIG. 8 illustrates an example of the method of setting the magnetic field shield according to the third embodiment.

First, a magnetic field shield formed by unit magnetic field shields 130a which can be combined is prepared. Then, the number of the unit magnetic field shields 130a forming the magnetic field shield is increased or decreased such that a value of the electric current or the magnetic field measured by the measurement device 160 becomes equal to the maximum value. Magnetic fluxes passing through the magnetic field shield vary with the number of the unit magnetic field shields 130a, whereby the resonance frequency of the resonance coil 110 varies.

With this adjustment, the magnetic field shield 130 is set. This makes it possible to adjust the resonance frequency of the resonance coil 110 to the target frequency.

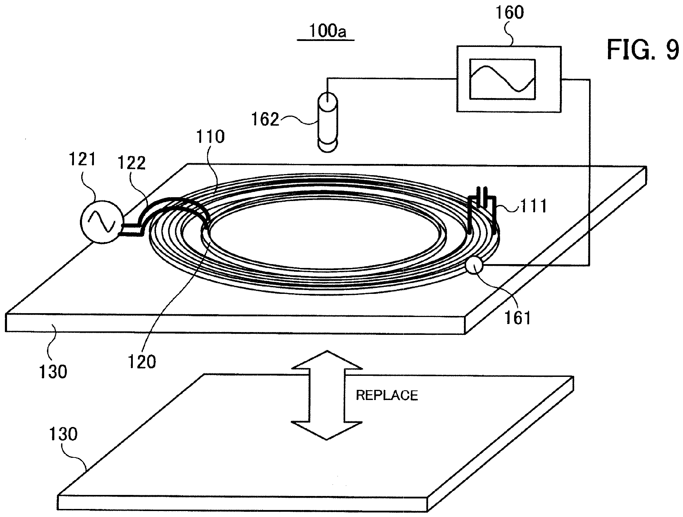

FIG. 9 illustrates another example of the method of setting the magnetic field shield according to the third embodiment.

First, a plurality of kinds of replaceable magnetic field shields 130, which are different in the shape, the thickness, or the permeability, are prepared. Then, the plurality of magnetic field shields 130 are sequentially disposed, and measurement is performed using the measurement device 160. Then, the magnetic field shield 130 which allows the electric current or the magnetic field measured by the measurement device 160 to be equal to the maximum value is selected from the plurality of magnetic field shields 130.

The magnetic field shield 130 is set as mentioned above. This makes it possible to adjust the resonance frequency of the resonance coil 110 to the target frequency.

Note that the setting of the magnetic field shield 130 according to the third embodiment is performed before the adjustment of the resonance coil 110 according to the second embodiment.

Next, a description will be given of another embodiment in which the magnetic resonance electric power-transmitting apparatus 10 according to the first embodiment is further embodied, as a fourth embodiment.

[Fourth Embodiment]

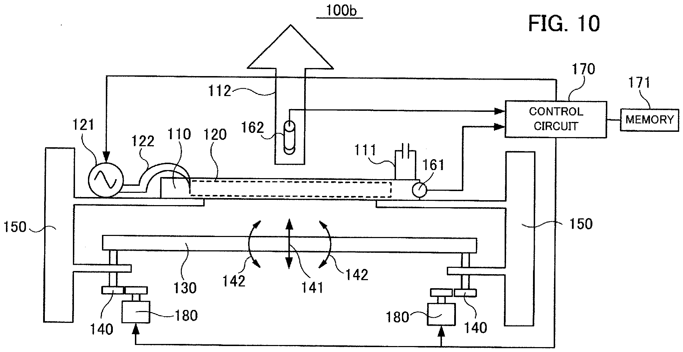

FIG. 10 is a side view of an example of the magnetic resonance electric power-transmitting apparatus according to the fourth embodiment.

The magnetic resonance electric power-transmitting apparatus 100b is distinguished from the magnetic resonance electric power-transmitting apparatus 100a according to the second embodiment in that the measurement device 160 replaced by a control circuit 170 and a plurality of motors 180.

The plurality of motors 180 are disposed in association with the position adjustment screws 140, and rotate the position adjustment screws 140, respectively.

The control circuit 170 is connected to the current sensor 161 and the magnetic field sensor 162, and measures an electric current detected by the current sensor 161 and a magnetic field detected by the magnetic field sensor 162. Further, the control circuit 170 includes a memory 171, and stores the measured current value and magnetic field intensity in the memory 171.

Further, the control circuit 170 is connected to the plurality of motors 180, and controls the operations of the motors 180, respectively. The control circuit 170 is further connected to the alternating current power supply 121, and controls the power supply of the alternating current power supply 121.

Next, a description will be given of a procedure of adjustment of the magnetic resonance electric power-transmitting apparatus 100b.

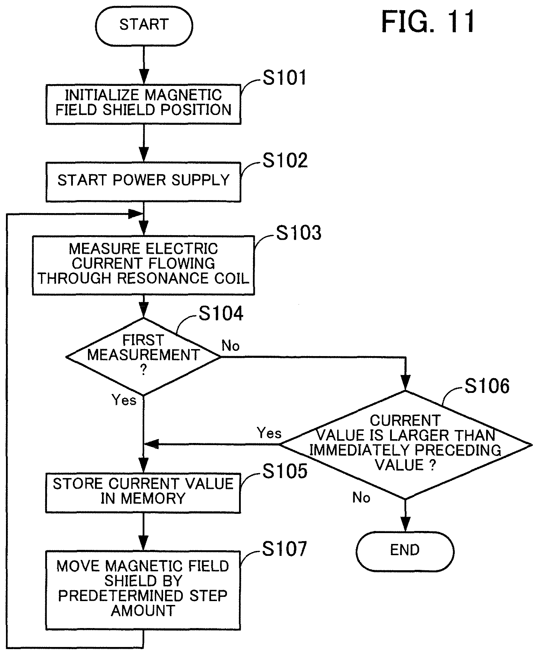

FIG. 11 is a flowchart of an example of the procedure of adjustment of the magnetic resonance electric power-transmitting apparatus according to the fourth embodiment.

The following process is started e.g. whenever electric power transmission is executed between the magnetic resonance electric power-transmitting apparatus 100b and the magnetic resonance electric power-receiving apparatus.

[step S101] The control circuit 170 controls the motors 180 to move the magnetic field shield 130 to an initial position. Note that the initial position is set at a position most away from the resonance coil 110.

[step S102] The control circuit 170 controls the alternating current power supply 121 to supply electric power to the coil 120.

[step S103] The control circuit 170 measures the electric current flowing through the resonance coil 110, detected by the current sensor 161. Note that the magnetic field generated by the resonance coil 110, which is detected by the magnetic field sensor 162, may be measured in place of measuring the electric current.

[step S104] The control circuit 170 determines whether or not the measurement in the step S103 is the first measurement. If the measurement in the step S103 is the first measurement, the process proceeds to a step S105. If the measurement in the step S103 is not the first measurement, i.e. if it is the second or later measurement, the process proceeds to a step S106.

[step S105] The control circuit 170 stores the electric current value measured in the step S103 in the memory 171.

[step S106] The control circuit 170 determines whether or not the current value measured in the step S103 is larger than the immediately preceding measured value stored in the memory 171. If the current value is larger than the immediately preceding measured value, the process proceeds to the step S105. If the current value is not larger than the immediately preceding measured value, the present process is terminated. Alternatively, the position of the magnetic field shield 130 is returned to the immediately preceding position, followed by terminating the present process.

[step S107] The control circuit 170 controls the motors 180 such that the magnetic field shield 130 is moved in a translational manner by a predetermined step amount, and the process proceeds to the step S103. In the present case, the magnetic field shield 130 moves in a direction toward the resonance coil 110.

After execution of the above-described process, the movement of the position of the magnetic field shield 130 in the step S107 may be changed from the translational movement to the pivotal movement by which finer adjustment is possible, and then the steps S103 to S107 may be repeated.

By executing the above process, it is possible to perform adjustment such that the value of the electric current flowing through the resonance coil 110 becomes equal to the maximum value. This makes it possible to adjust the resonance frequency of the resonance coil 110 to the target frequency.

Next, a description will be given of an embodiment in which the magnetic resonance electric power-receiving apparatus 20 according to the first embodiment is further embodied, as a fifth embodiment.

[Fifth Embodiment]

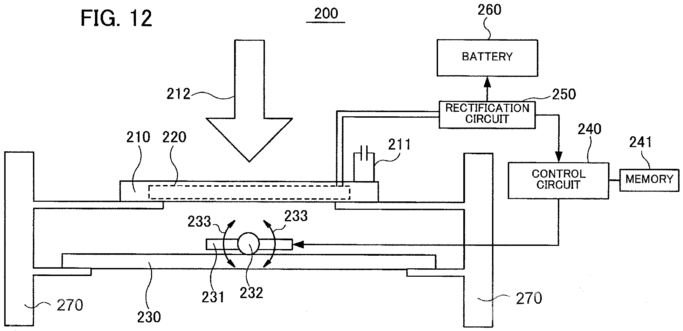

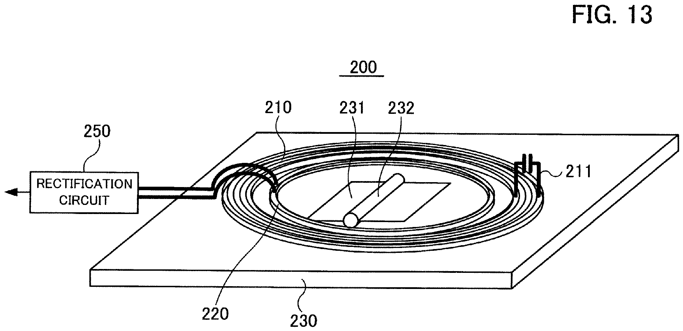

FIG. 12 is a side view of an example of the magnetic resonance electric power-receiving apparatus according to the fifth embodiment. FIG. 13 is a perspective view corresponding to FIG. 12. Note that in FIG. 13, illustration of a frame 270, a control circuit 240, and a battery 260 is omitted.

The magnetic resonance electric power-receiving apparatus 200 includes a resonance coil 210 to which electric power is transmitted from the resonance coil (not illustrated) of the magnetic resonance electric power-transmitting apparatus, and a coil 220 from which receives electric power is received from the resonance coil 210.

For the material of the resonance coil 210, copper (Cu), for example, is used. For the resonance coil 210, a spiral coil having a diameter of 30 cm, for example, is used. The resonance coil 210 forms an LC resonance circuit having an inductance L and a capacitance C, and has the resonance frequency of the same frequency as the transmission frequency. Although the capacitance C is obtained by providing a capacitor 211 between coil wires of the resonance coil 210, the capacitance C may be obtained by floating capacitance of the resonance coil 210 without using the capacitor 211. Further, the resonance frequency of the resonance coil 210 is e.g. 10 MHz.

Further, when electric power is transmitted from the resonance coil of the magnetic resonance electric power-transmitting apparatus by magnetic resonance, an alternating current having the same frequency as the transmission frequency flows through the resonance coil 210. An arrow 212 in FIG. 12 indicates a direction of electric power transmission.

For the material of the coil 220, copper (Cu), for example, is used. The coil 220 has a smaller diameter than that of the resonance coil 210, and is disposed inside the resonance coil 210. By making the diameter of the coil 220 smaller than that of the resonance coil 210, it is possible to reduce a degree of influence of the magnetic field generated by the coil 220 on the electric power transmission by magnetic resonance.

When an alternating current flows through the resonance coil 210, the coil 220 receives electric power from the resonance coil 210 by electromagnetic induction, and generates an alternating current. As mentioned above, the coil 220 receives electric power from the resonance coil 210 not by wiring but by electromagnetic induction. This makes it possible to prevent resistance from being added to the resonance coil 210, and hence it is possible to obtain the resonance coil 210 with a small loss and a high resonance Q-value.

Further, the magnetic resonance electric power-receiving apparatus 200 includes a magnetic field shield 230 which varies a magnetic field generated by the resonance coil 210, and a magnetic material 231.

For the magnetic field shield 230, a magnetic material, such as a ferrite, is used. The magnetic field shield 230 is located below the resonance coil 210. That is, the magnetic field shield 230 is disposed at a location opposite from a side of the resonance coil 210 where electric power transmission by magnetic resonance is performed. The magnetic field shield 230 varies the magnetic field generated by the resonance coil 210 according to the relative position to the resonance coil 210 and the shape thereof to thereby vary the resonance frequency of the resonance coil 210.

Further, the magnetic field shield 230 prevents the magnetic field generated by the resonance coil 210 from being affected by external magnetic materials, and further prevents the magnetic field generated by the resonance coil 210 from affecting external electronic components.

For the material of the magnetic material 231, a ferrite is used. Further, the magnetic material 231 includes a pivotal mechanism 232. For example, a minute mechanism, such as a VCM (voice coil motor), a piezoelectric element, or MEMS (micro electro mechanical systems), is used for the pivotal mechanism 232. The magnetic material 231 is pivoted by the pivotal mechanism 232 as indicated by arrows 233.

The magnetic material 231 is mounted above the magnetic field shield 230 such that it is positioned between the resonance coil 210 and the magnetic field shield 230. The magnetic material 231 varies the magnetic field generated by the resonance coil 210 according to the relative position to the resonance coil 210 and the shape thereof to thereby vary the resonance frequency of the resonance coil 210.

The magnetic resonance electric power-receiving apparatus 200 further includes the frame 270 which supports the resonance coil 210, the coil 220, and the magnetic field shield 230.

Further, the magnetic resonance electric power-receiving apparatus 200 includes a rectification circuit 250 for rectifying an alternating current generated in the coil 220, the battery 260 for accumulating electric power by the electric current rectified by the rectification circuit 250, and the control circuit 240 for measuring the electric current (electric power) rectified by the rectification circuit 250.

Note that an electric current flowing through the coil 220 becomes larger as the resonance frequency of the resonance coil 210 becomes closer to the target frequency, and becomes maximum when the resonance frequency of the resonance coil 210 is equal to the target frequency.

The control circuit 240 includes a memory 241, and stores the measured current value in the memory 241. Further, the control circuit 240 is connected to the pivotal mechanism 232 of the magnetic material 231 to control the operation of the pivotal mechanism 232.

Next, a description will be given of a procedure of adjustment of the magnetic resonance electric power-receiving apparatus 200.

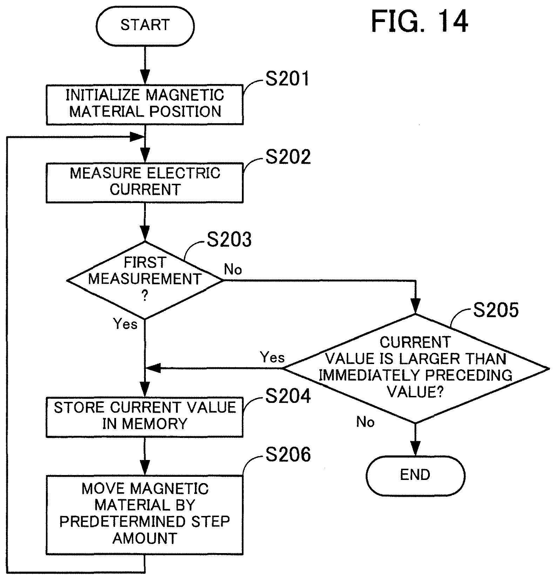

FIG. 14 is a flowchart of an example of the procedure of adjustment of the magnetic resonance electric power-receiving apparatus according to the fifth embodiment.

The following process is started e.g. whenever electric power transmission is executed between the magnetic resonance electric power-transmitting apparatus and the magnetic resonance electric power-receiving apparatus 200.

[step S201] The control circuit 240 controls the pivotal mechanism 232 of the magnetic material 231 to move the magnetic material 231 to an initial position. In the present embodiment, the initial position is set to a position remotest from the resonance coil 210. That is, the magnetic material 231 is disposed such that it is parallel to the resonance coil 210.

[step S202] The control circuit 240 measures the electric current rectified by the rectification circuit 250.

[step S203] The control circuit 240 determines whether or not the measurement in the step S202 is the first measurement. If the measurement in the step S202 is the first measurement, the process proceeds to a step S204. If the measurement in the step S202 is not the first measurement, i.e. if it is the second or later measurement, the process proceeds to a step S205.

[step S204] The control circuit 240 stores the electric current value measured in the step S202 in the memory 241.

[step S205] The control circuit 240 determines whether or not the current value measured in the step S202 is larger than the immediately preceding measured value stored in the memory 241. If the current value is larger than the immediately preceding measured value, the process proceeds to the step S204. If the current value is not larger than the immediately preceding measured value, the present process is terminated. Alternatively, the position of the magnetic material 231 is returned to the immediately preceding position, followed by terminating the present process.

[step S206] The control circuit 240 controls the pivotal mechanism 232 of the magnetic material 231 to pivot the position of the magnetic material 231 by a predetermined step amount, and the process proceeds to the step S202.

By executing the above process, it is possible to perform adjustment such that the electric current flowing through the resonance coil 210 becomes maximum. This makes it possible to adjust the resonance frequency of the resonance coil 210 to the target frequency.

As described above, the magnetic resonance electric power-receiving apparatus 200 adjusts the resonance frequency of the resonance coil 210 using the magnetic material 231 including the minute pivotal mechanism 232 which is provided separately from the magnetic field shield 230.

Therefore, compared with the adjustment of the position of the magnetic field shield 230 itself, it is possible to reduce the mechanism in size. As a result, by mounting the magnetic resonance electric power-receiving apparatus 200 on electronic devices, such as a cellular phone, which are required to be reduced in size, it is possible to simultaneously achieve downsizing of the electronic devices, and improvement of the efficiency of electric power transmission.

Further, according to this configuration, it is possible to perform finer adjustment compared with adjustment of the position of the magnetic field shield 230 itself, which makes it possible to perform more accurate adjustment.

Although in the fifth embodiment, the description has been given of the magnetic resonance electric power-receiving apparatus, it is also possible to apply the method of setting the resonance frequency according to the fifth embodiment to the magnetic resonance electric power-transmitting apparatus.

For example, the method of setting the resonance frequency according to the fifth embodiment may be applied to the magnetic resonance electric power-transmitting apparatus 100b according to the fourth embodiment such that the magnetic material 231 including a pivotal mechanism as provided in the magnetic resonance electric power-receiving apparatus 200 is provided for the magnetic field shield 130, and the pivotal mechanism of the magnetic material 231 is controlled by the control circuit 170.

Further, it is also possible to apply the method of adjusting the resonance frequency according to the second embodiment to the magnetic resonance electric power-receiving apparatus 200 according to the fifth embodiment.

For example, the adjustment method may be applied such that the position adjustment screws 140 as provided in the magnetic resonance electric power-transmitting apparatus 100a according to the second embodiment are provided on the magnetic field shield 230 of the magnetic resonance electric power-receiving apparatus 200, and the position of the magnetic field shield 230 is adjusted by the position adjustment screws 140.

Further, the method of adjusting the magnetic field shield according to the third embodiment may be applied to the magnetic field shield 230 of the magnetic resonance electric power-receiving apparatus 200 according to the fifth embodiment.

Further, it is also possible to apply the method of adjusting the resonance frequency according to the fourth embodiment to the magnetic resonance electric power-receiving apparatus 200 according to the fifth embodiment.

For example, the adjustment method may be applied such that the position adjustment screws 140 and the motors 180 as provided in the magnetic resonance electric power-transmitting apparatus 100b according to the third embodiment are provided for the magnetic field shield 230 of the magnetic resonance electric power-receiving apparatus 200, and the motors 180 are controlled by the control circuit 240 to thereby adjust the position of the magnetic field shield 230.

Next, a description will be given of a procedure of adjustment of the magnetic resonance electric power-transmitting apparatus and the magnetic resonance electric power-receiving apparatus in the magnetic resonance wireless electric power transmission system as a sixth embodiment.

[Sixth Embodiment]

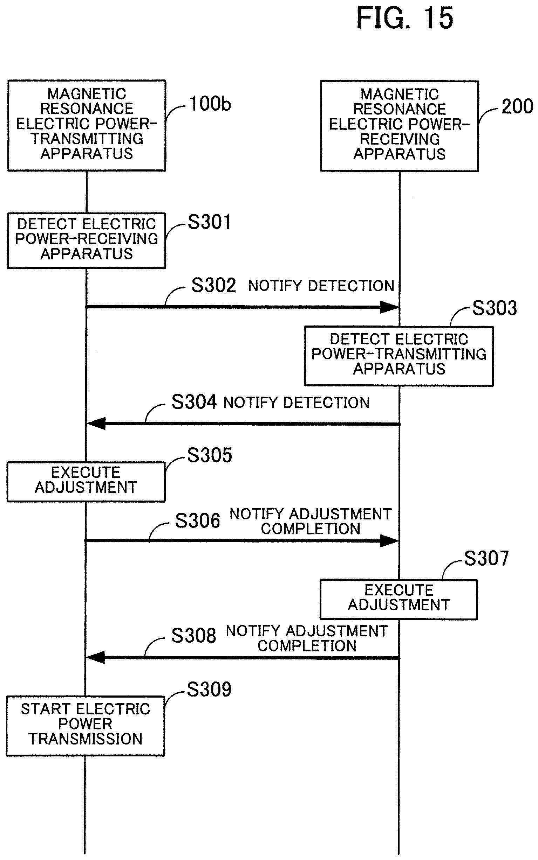

FIG. 15 is a sequence diagram of an example of the procedure of adjustment of the magnetic resonance wireless electric power transmission system according to the sixth embodiment.

In the sixth embodiment, the description will be given of a case where the magnetic resonance electric power-transmitting apparatus 100b according to the fourth embodiment is used as the magnetic resonance electric power-transmitting apparatus, and the magnetic resonance electric power-receiving apparatus 200 according to the fifth embodiment is used as the magnetic resonance electric power-receiving apparatus, by way of example. In the present embodiment, it is assumed that the magnetic resonance electric power-transmitting apparatus 100b and the magnetic resonance electric power-receiving apparatus 200 each have a structure capable of communicating with each other.

[step S301] The magnetic resonance electric power-transmitting apparatus 100b executes processing for detecting the magnetic resonance electric power-receiving apparatus 200.

[step S302] Upon detection of the magnetic resonance electric power-receiving apparatus 200, the magnetic resonance electric power-transmitting apparatus 100b notifies the magnetic resonance electric power-receiving apparatus 200 of the detection.

[step S303] The magnetic resonance electric power-receiving apparatus 200 executes processing for detecting the magnetic resonance electric power-transmitting apparatus 100b.

[step S304] Upon detection of the magnetic resonance electric power-transmitting apparatus 100b, the magnetic resonance electric power-receiving apparatus 200 notifies the magnetic resonance electric power-transmitting apparatus 100b of the detection.

[step S305] The magnetic resonance electric power-transmitting apparatus 100b executes the process for adjusting the resonance frequency of the resonance coil 110 illustrated in FIG. 11.

[step S306] When the process for adjusting the resonance frequency of the resonance coil 110 is completed, the magnetic resonance electric power-transmitting apparatus 100b notifies the magnetic resonance electric power-receiving apparatus 200 of the adjustment completion.

[step S307] The magnetic resonance electric power-receiving apparatus 200 executes the process for adjusting the resonance frequency of the resonance coil 210 illustrated in FIG. 14. Note that in the process illustrated in FIG. 14, the initialization of the position of the magnetic material 231 in the step S201 in the adjustment process illustrated in FIG. 14 may be executed in advance immediately after the step S304.

[step S308] When the process for adjusting the resonance frequency of the resonance coil 210 is completed, the magnetic resonance electric power-receiving apparatus 200 notifies the magnetic resonance electric power-transmitting apparatus 100b of the adjustment completion, followed by terminating the present process.

[step S309] The magnetic resonance electric power-transmitting apparatus 100b starts electric power transmission by magnetic resonance, followed by terminating the present process.

By execution of the above process, it is possible to adjust the resonance frequency of the resonance coils 110 and 210 to the target frequency, which makes it possible to improve the efficiency of electric power transmission.

The foregoing is considered as illustrative only of the principles of the present invention. Further, since numerous modifications and changes will readily occur to those skilled in the art, it is not desired to limit the invention to the exact construction and applications shown and described, and accordingly, that is only defined in the appended claims.

Reference Signs List

| | |
|---|---|
| 1 | magnetic resonance wireless electric power transmission system |
| 10 | magnetic resonance electric power-transmitting apparatus |
| 11, 21 | resonance coil |
| 12 | electric power-supplying unit |
| 13 | magnetic material |
| 14 | position adjustment unit |
| 20 | magnetic resonance electric power-receiving apparatus |
| 22 | electric power-receiving unit |

## Claims

1.  A magnetic resonance electric power-transmitting apparatus (10) comprising:

    a resonance coil (11);
    an electric power-supplying unit (12) configured to supply electric power to the resonance coil to cause the resonance coil to generate a magnetic field;
    a magnetic material (13) configured to vary a magnetic field generated by the resonance coil;
    a position adjustment unit (14) configured to adjust a positional relationship between the resonance coil and the magnetic material;
    a current sensor (161) for detecting an electric current flowing through the resonance coil or a magnetic field sensor (162) for detecting a magnetic field generated by the resonance coil; and
    a control circuit (170) configured to control the position adjustment unit so that a magnitude of an electric current detected by the current sensor or a magnetic field detected by the magnetic field sensor becomes closer to a maximum, **characterised in that**
    the magnetic material is disposed at a location opposite from a side of the resonance coil where electric power transmission is performed by magnetic resonance.

2.  The magnetic resonance electric power-transmitting apparatus according to claim 1, wherein a magnetic field shield which is larger in area than the resonance coil is used as the magnetic material, and

wherein the magnetic field shield is formed by unit magnetic field shields which can be combined.

3. The magnetic resonance electric power-transmitting apparatus according to claim 1, wherein a magnetic field shield is used for the magnetic material, and wherein the magnetic field shield has a structure that is changeable with another magnetic field shield which is different in permeability.

4. The magnetic resonance electric power-transmitting apparatus according to any one of claims 1 to 3, wherein the position adjustment unit moves the magnetic material in a translational manner with respect to the resonance coil.

5. The magnetic resonance electric power-transmitting apparatus according to any one of claims 1 to 4, wherein the position adjustment unit pivotally moves the magnetic material.

6. A magnetic resonance electric power-receiving apparatus (20), comprising:

a resonance coil (21);
an electric power-receiving unit (22) configured to receive electric power from the resonance coil;
a magnetic material configured to vary a magnetic field generated by the resonance coil;
a position adjustment unit configured to adjust a positional relationship between the resonance coil and the magnetic material; and
a control circuit (240) configured to control the position adjustment unit so that a magnitude of electric power received by the electric power-receiving unit becomes closer to a maximum, **characterised in that**
the magnetic material is disposed at a location opposite from a side of the resonance coil where electric power transmission is performed by magnetic resonance.

7. The magnetic resonance electric power-receiving apparatus according to claim 6, comprising a magnetic field shield on which the magnetic material and the position adjustment unit are placed.

**Patentansprüche**

1. Magnetresonanz-Elektroenergie-Übertragungsvorrichtung (10), umfassend:

eine Resonanzspule (11);
eine elektrische Energieversorgungseinheit (12), die konfiguriert ist, der Resonanzspule elektrische Energie zuzuführen, um die Resonanzspule zu veranlassen, ein Magnetfeld zu erzeugen;
ein magnetisches Material (13), das konfiguriert ist, ein Magnetfeld, das durch die Resonanzspule erzeugt wird, zu verändern;
eine Positionsanpassungseinheit (14), die konfiguriert ist, eine Positionsbeziehung zwischen der Resonanzspule und dem magnetischen Material anzupassen;
einen Stromsensor (161) zum Erkennen eines elektrischen Stroms, der durch die Resonanzspule fließt, oder einen Magnetfeldsensor (162) zum Erkennen eines Magnetfelds, das durch die Resonanzspule erzeugt wird; und
eine Steuerschaltung (170), die konfiguriert ist, die Positionsanpassungseinheit so zu steuern, dass eine Stärke eines elektrischen Stroms, der durch den Stromsensor erkannt wird, oder ein Magnetfeld, das durch den Magnetfeldsensor erkannt wird, sich einem Maximum nähern, **dadurch gekennzeichnet, dass**

das magnetische Material an einer Stelle gegenüber von einer Seite der Resonanzspule angeordnet ist, wo elektrische Energieübertragung durch Magnetresonanz durchgeführt wird.

2. Magnetresonanz-Elektroenergie-Übertragungsvorrichtung nach Anspruch 1, wobei eine Magnetfeldabschirmung, die in einem Bereich größer als die Resonanzspule ist, als das magnetische Material verwendet wird, und
wobei die Magnetfeldabschirmung durch Magnetfeld-Abschirmungseinheiten gebildet wird, die nicht kombiniert werden können.

3. Magnetresonanz-Elektroenergie-Übertragungsvorrichtung nach Anspruch 1, wobei eine Magnetfeldabschirmung für das magnetische Material verwendet wird, und
wobei die Magnetfeldabschirmung eine Struktur aufweist, die mit einer anderen Magnetfeldabschirmung austauschbar ist, die sich bezüglich der Durchlässigkeit unterscheidet.

4. Magnetresonanz-Elektroenergie-Übertragungsvorrichtung nach einem der Ansprüche 1 bis 3, wobei die Positionsanpassungseinheit das magnetische Material relativ zu der Resonanzspule übergangsweise bewegt.

5. Magnetresonanz-Elektroenergie-Übertragungsvorrichtung nach einem der Ansprüche 1 bis 4, wobei die Positionsanpassungseinheit das magnetische Material schwenkbar bewegt.

6. Magnetresonanz-Elektroenergie-Empfangsvorrichtung (20), umfassend:

eine Resonanzspule (21);

eine Elektroenergie-Empfangseinheit (22), die konfiguriert ist, elektrische Energie von der Resonanzspule zu empfangen;

ein magnetisches Material, das konfiguriert ist, ein Magnetfeld, das durch die Resonanzspule erzeugt wird, zu verändern;

eine Positionsanpassungseinheit, die konfiguriert ist, eine Positionsbeziehung zwischen der Resonanzspule und dem magnetischen Material anzupassen; und

eine Steuerschaltung (240), die konfiguriert ist, die Positionsanpassungseinheit so zu steuern, dass eine Stärke des elektrischen Stroms, der von der Elektroenergie-Empfangseinheit empfangen wird, sich einem Maximum nähert, **dadurch gekennzeichnet, dass**

das magnetische Material an einer Stelle gegenüber von einer Seite der Resonanzspule angeordnet ist, wo elektrische Energieübertragung durch Magnetresonanz durchgeführt wird.

**7.** Magnetresonanz-Elektroenergie-Empfangsvorrichtung nach Anspruch 6, die eine Magnetfeldabschirmung umfasst, auf der das magnetische Material und die Positionsanpassungseinheit angeordnet sind.

## Revendications

**1.** Dispositif de transmission d'énergie électrique par résonance magnétique (10), comprenant :

une bobine à résonance (11) ;

une unité d'alimentation d'énergie électrique (12) configurée pour alimenter de l'énergie électrique vers la bobine à résonance afin d'amener la bobine à résonance à générer un champ magnétique ;

un matériau magnétique (13) configuré pour modifier un champ magnétique généré par la bobine à résonance ;

une unité d'ajustement de position (14) configurée pour ajuster une relation positionnelle entre la bobine à résonance e le matériau magnétique ;

un capteur de courant (161) pour détecter un courant électrique circulant à travers la bobine à résonance ou un capteur de champ magnétique (162) pour détecter un champ magnétique généré par la bobine à résonance ; et

un circuit de commande (170) configuré pour commander l'unité d'ajustement de position de sorte qu'une amplitude d'un courant électrique détecté par le capteur de courant ou d'un champ magnétique détecté par le capteur de champ magnétique devient plus proche d'un maximum, **caractérisé en ce que**

le matériau magnétique est disposé au niveau d'un emplacement opposé à un côté de la bobine à résonance où une transmission d'énergie électrique est effectuée par résonance magnétique.

**2.** Dispositif de transmission d'énergie électrique par résonance magnétique selon la revendication 1, dans lequel un blindage contre les champs magnétiques qui est d'une plus grande superficie que la bobine à résonance est utilisé comme matériau magnétique, et

dans lequel le blindage contre les champs magnétiques est formé par des blindages contre les champs magnétiques unitaires qui peuvent être combinés.

**3.** Dispositif de transmission d'énergie électrique par résonance magnétique selon la revendication 1, dans lequel un blindage contre les champs magnétiques est utilisé pour le matériau magnétique, et

dans lequel le blindage contre les champs magnétiques a une structure qui peut être changée avec un autre blindage contre les champs magnétiques qui est différent en termes de perméabilité.

**4.** Dispositif de transmission d'énergie électrique par résonance magnétique selon l'une quelconque des revendications 1 à 3, dans lequel l'unité d'ajustement de position déplace le matériau magnétiques en translation par rapport à la bobine à résonance.

**5.** Dispositif de transmission d'énergie électrique par résonance magnétique selon l'une quelconque des revendications 1 à 4, dans lequel l'unité d'ajustement de position déplace le matériau magnétique de manière pivotante.

**6.** Dispositif de réception d'énergie par résonance magnétique (20), comprenant :

une bobine à résonance (21) ;

une unité de réception d'énergie électrique (22) configurée pour recevoir de l'énergie électrique à partir de la bobine à résonance ;

un matériau magnétique configuré pour modifier un champ magnétique généré par la bobine à résonance ;

une unité d'ajustement de position configurée pour ajuster une relation positionnelle entre la bobine à résonance et le matériau magnétique ; et

un circuit de commande (240) configuré pour commander l'unité d'ajustement de position de sorte qu'une amplitude d'énergie électrique reçue par l'unité de réception d'énergie électrique devient plus proche d'un maximum, **caractérisé**

**en ce que**

le matériau magnétique est disposé en un emplacement opposé à un côté de la bobine à résonance où une transmission d'énergie électrique est effectuée par résonance monétique.

7. Dispositif de réception d'énergie électrique par résonance magnétique selon la revendication 6, comprenant un blindage contre les champs magnétiques sur lequel le matériau magnétique et l'unité d'ajustement de position sont placés.

**FIG. 1**

# FIG. 2

LC RESONANCE
CIRCUIT

FIG. 3

CHARACTERISTIC 1a:
RESONANCE FREQUENCY OF
RESONANCE COIL 11＝f0
RESONANCE FREQUENCY OF
RESONANCE COIL 21＝f0

CHARACTERISTIC 1b:
RESONANCE FREQUENCY OF
RESONANCE COIL 11＝f0
RESONANCE FREQUENCY OF
RESONANCE COIL 21＝f0＋5%

CHARACTERISTIC 1c:
RESONANCE FREQUENCY OF
RESONANCE COIL 11＝f0
RESONANCE FREQUENCY OF
RESONANCE COIL 21＝f0+10%

# FIG. 4(A)

# FIG. 4(B)

# FIG. 5

FIG. 6

FIG. 7

FIG. 8

FIG. 9

100b

FIG. 10

FIG. 11

```
              ( START )
                  │
                  ▼
        ┌──────────────────────┐  ─S101
        │ INITIALIZE MAGNETIC  │
        │ FIELD SHIELD POSITION│
        └──────────────────────┘
                  │
                  ▼
        ┌──────────────────────┐  ─S102
        │  START POWER SUPPLY  │
        └──────────────────────┘
                  │
                  ▼
        ┌──────────────────────┐  ─S103
        │   MEASURE ELECTRIC   │
        │   CURRENT FLOWING    │
        │THROUGH RESONANCE COIL│
        └──────────────────────┘
                  │
                  ▼
             ╱─S104                      ─S106
          ╱  FIRST  ╲    No        ╱ CURRENT       ╲
         ╱MEASUREMENT ╲───────────╱ VALUE IS LARGER THAN╲
          ╲     ?    ╱        ┌──╲IMMEDIATELY PRECEDING ╱
           ╲       ╱          │    ╲   VALUE ?    ╱
              │ Yes       Yes │       │ No
              │    ◄──────────┘       │
              ▼                       ▼
        ┌──────────────────────┐ ─S105   ( END )
        │ STORE CURRENT VALUE  │
        │     IN MEMORY        │
        └──────────────────────┘
                  │
                  ▼
        ┌──────────────────────┐ ─S107
        │ MOVE MAGNETIC FIELD  │
        │     SHIELD BY        │
        │ PREDETERMINED STEP   │
        │      AMOUNT          │
        └──────────────────────┘
```

FIG. 12    200

FIG. 13

FIG. 14

START

INITIALIZE MAGNETIC MATERIAL POSITION — S201

MEASURE ELECTRIC CURRENT — S202

FIRST MEASUREMENT ? — S203

No → CURRENT VALUE IS LARGER THAN IMMEDIATELY PRECEDING VALUE? — S205

Yes (S203) → STORE CURRENT VALUE IN MEMORY — S204

Yes (S205) → STORE CURRENT VALUE IN MEMORY — S204

MOVE MAGNETIC MATERIAL BY PREDETERMINED STEP AMOUNT — S206

No (S205) → END

28

# FIG. 15

```
┌─────────────────┐              ┌─────────────────┐
│    MAGNETIC     │              │    MAGNETIC     │
│   RESONANCE     │─100b         │   RESONANCE     │─200
│ ELECTRIC POWER- │              │ ELECTRIC POWER- │
│  TRANSMITTING   │              │   RECEIVING     │
│   APPARATUS     │              │   APPARATUS     │
└─────────────────┘              └─────────────────┘
         │                                │
┌─────────────────┐                       │
│ DETECT ELECTRIC │─S301                  │
│ POWER-RECEIVING │                       │
│   APPARATUS     │                       │
└─────────────────┘                       │
         │    ┌─ S302  NOTIFY DETECTION   │
         │─────────────────────────────►  │
         │                                │  ┌─S303
         │                       ┌─────────────────┐
         │                       │ DETECT ELECTRIC │
         │                       │POWER-TRANSMITTING│
         │                       │   APPARATUS     │
         │                       └─────────────────┘
         │    ┌─ S304  NOTIFY DETECTION   │
         │  ◄─────────────────────────────│
         │                                │
┌─────────────────┐─S305                  │
│    EXECUTE      │                        │
│  ADJUSTMENT     │                        │
└─────────────────┘                        │
         │   ┌─ S306  NOTIFY ADJUSTMENT    │
         │        COMPLETION               │
         │─────────────────────────────►   │
         │                                 │  ┌─S307
         │                        ┌─────────────────┐
         │                        │    EXECUTE      │
         │                        │  ADJUSTMENT     │
         │                        └─────────────────┘
         │  ┌─ S308  NOTIFY ADJUSTMENT     │
         │         COMPLETION              │
         │  ◄──────────────────────────────│
┌─────────────────┐─S309                   │
│ START ELECTRIC  │                         │
│     POWER       │                         │
│  TRANSMISSION   │                         │
└─────────────────┘                         │
         │                                  │
```

**EP 2 512 006 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009152862 A
- JP 2007142088 A
- JP 62126607 A
- US 2009224608 A1